# EUROPÄISCHE PATENTSCHRIFT

(11) **EP 3 418 163 B1**
(45) Veröffentlichungstag und Bekanntmachung des Hinweises auf die Patenterteilung: **15.06.2022**
(21) Anmeldenummer: 18178166.7
(22) Anmeldetag: 18.06.2018
(51) Int. Cl.: B62D 15/02

(54) **AUTOMATISCHES EINPARKEN NACH EINEM ABGEBROCHENEN MANUELLEN EINPARKVORGANG**
AUTOMATIC PARKING AFTER A CANCELLED MANUAL PARKING MANOEUVRE
STATIONNEMENT AUTOMATIQUE APRÈS UNE OPÉRATION DE STATIONNEMENT MANUELLE ABANDONNÉE

(30) Priorität: 21.06.2017 DE 102017113663
(43) Veröffentlichungstag der Anmeldung: 26.12.2018
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)
(74) Vertreter: Pothmann, Karsten

(56) Entgegenhaltungen:
- DE-A1-102005 046 827
- DE-A1-102007 049 965
- DE-A1-102008 000 575
- DE-A1-102009 046 677

## Beschreibung

Die vorliegende Erfindung betrifft ein Verfahren zum Einparken eines Fahrzeugs in eine Parklücke. Darüber hinaus betrifft die vorliegende Erfindung ein Fahrzeug mit einem Einparkassistenten, der ein Ausführen eines vollständig manuellen Einparkversuchs in eine Parklücke und sein Aktivieren in der Parklücke ermöglicht, sowie einer Sensoreinrichtung zum Erfassen von Umgebungsdaten betreffend die Umgebung des Fahrzeugs.

Unter einem Einparkassistenten wird hier eine Software oder eine Hardware verstanden, die den Fahrer eines Fahrzeugs beim Einparken unterstützt. Ein Fahrzeug kann beispielsweise ein Personenkraftwagen, ein Lastkraftwagen oder ein ähnliches Beförderungsmittel sein. Darüber hinaus kann das Fahrzeug auch mit einem Anhänger versehen sein.

Bei einem automatischen Einparken sucht sich das Fahrzeug automatisch eine Einparklücke und bewegt anschließend das Fahrzeug vollkommen automatisch in die Parklücke. Der Fahrer des Fahrzeugs muss überhaupt nicht eingreifen. Das Einparken wird hier vollkommen autonom durch einen Einparkassistenten des Fahrzeugs durchgeführt. Bei einem halbautomatischen Einparken hingegen unterstützt der Einparkassistent den Fahrer beim Einparken. Dies kann beispielsweise so gestaltet sein, dass der Einparkassistent alle Funktionen übernimmt außer beispielsweise das Gasgeben und das Bremsen. In einer anderen Ausgestaltung zeigt der Einparkassistent lediglich eine mögliche Route an, der der Fahrer manuell folgen muss.

Beim manuellen Einparken hingegen ist der Fahrer vollkommen auf sich selbst gestellt. Er muss sich die Parklücke suchen und ohne Unterstützung eines Parkassistenten dort einparken. Der Einparkassistent kann in dieser Situation beispielsweise deaktiviert oder überhaupt nicht vorhanden sein.

Beim manuellen Einparken entsteht öfters die Situation, dass der Fahrer die Parklücke und/oder die Position seines Fahrzeugs und/oder die Manövrierfähigkeit seines Fahrzeugs falsch einschätzt. Dies kann dazu führen, dass der Fahrer bei dem Einparkversuch nicht an seine gewünschte Zielposition gelangt. Vielmehr gelangt er nur an eine Position, in der er den Parkvorgang nicht abschließen kann (nachfolgend auch: "steckt in der Parklücke fest"). Dies hat zur Folge, dass er das Fahrzeug in der Regel wieder vollkommen aus der Parklücke rangieren muss, um erneut einen Einparkvorgang zu starten. Gegebenenfalls sucht sich der Fahrer beim zweiten Versuch eine andere Ausgangsposition.

Aus der Druckschrift DE 10 2007 049 965 A1 ist ein Verfahren zur Ausgabe von Einparkhinweisen bekannt. Die Hinweise dienen zum Erreichen einer Zielposition in einer Parklücke, wobei zunächst Daten über die Parklücke automatisch erfasst werden und ausgehend von einer aktuellen Position und Ausrichtung des Fahrzeugs eine Trajektorie zum Erreichen der Zielposition berechnet wird. Die Einparkhinweise leiten den Fahrer des Fahrzeugs entlang der Trajektorie. Es ist vorgesehen, dass die Daten über die Parklücke so lange in einem elektrischen Speicher gespeichert werden, bis das Fahrzeug die Zielposition erreicht oder der Fahrer den Einparkvorgang endgültig abbricht. Startet der Fahrer einen weiteren Einparkversuch, so kann er anhand der aktuellen Fahrzeugposition und Ausrichtung eine neue Trajektorie zum Erreichen der Zielposition bestimmen lassen. In einer anderen Ausführungsform wird der Fahrer aufgefordert, seinen Einparkversuch abzubrechen. Dann wird der Fahrer beispielsweise aufgefordert, das Fahrzeug in eine beliebige oder in eine bestimmte Startposition zu bewegen, von der aus ein erneuter Einparkversuch stattfinden soll. Die vorgegebene Startposition liegt vorteilhafterweise innerhalb definierter Toleranzbereiche.

Darüber hinaus offenbart die Druckschrift DE 10 2005 046 827 A1 ein Verfahren zur Einparkunterstützung. Dabei werden bei einer noch nicht abschließenden, zumindest teilweisen Positionierung des Fahrzeugs in einer Parklücke die Abmessungen der Parklücke bestimmt. Anschließend wird eine Trajektorie des Fahrzeugs zum Abschluss des Einparkvorgangs bestimmt. Dem Fahrer wird die Möglichkeit gegeben, auch dann nachträglich eine Unterstützung durch das Einparksystem zu erhalten, wenn er es zunächst nicht aktiviert hatte. Stellt sich heraus, dass eine Parklücke nicht geeignet ist, da sie tatsächlich für einen Einparkvorgang zu klein ist, so wird dies dem Fahrer angezeigt. Ist jedoch noch ein Einparken möglich, wird der Fahrer bevorzugt zu einer Position geführt, von der er in geeigneter Weise in die Parklücke einfahren kann. Mit einer entsprechenden Einparktrajektorie wird der Fahrer zunächst zu einem Umkehrpunkt geführt, von dem aus er über eine weitere Trajektorie zu der idealen Parkposition gelangt.

Die Aufgabe der vorliegenden Erfindung besteht somit darin, den Fahrer nach einem gescheiterten Einparkversuch besser zu unterstützen.

Erfindungsgemäß wird diese Aufgabe gelöst durch ein Verfahren und ein Fahrzeug gemäß den unabhängigen Ansprüchen. Vorteilhafte Weiterbildungen der Erfindung ergeben sich aus den Unteransprüchen.

Erfindungsgemäß wird demnach ein Verfahren zum Einparken eines Fahrzeugs in eine Parklücke vorgesehen. Die Parklücke muss groß genug sein, dass das Fahrzeug in vorbestimmter Weise einparken kann. Gegebenenfalls sind vorgegebene Abstände an den Rändern der Parklücke einzuhalten. Zunächst erfolgt ein Ausführen eines vollständig manuellen Einparkvorgangs in die Parklücke. Dies bedeutet, dass der Fahrer ohne Unterstützung eines Einparkassistenten versucht, das Fahrzeug in der Parklücke zu parken. Wenn beispielsweise der manuelle Einparkversuch scheitert, erfolgt ein Aktivieren eines Einparkassistenten des Fahrzeugs in der Parklücke. Bei dem Aktivieren des Einparkassistenten befindet sich das Fahrzeug noch nicht auf der gewünschten Zielposition in der Parklücke. Vielmehr befindet sich das Fahrzeug beispielsweise nur teilweise in der Parklücke oder es befindet sich beispielsweise vollständig in der Parklücke, aber die Ausrichtung ist nicht ideal. Der Einparkassistent kann dabei manuell oder automatisch aktiviert werden. Das automatische Aktivieren kann beispielsweise dadurch erfolgen, dass aus einer Erfassung von Fahrzeug- und Umgebungsdaten geschlossen werden kann, dass ein Parkvorgang erfolgen soll.

Gleichzeitig mit dem Aktivieren des Einparkassistenten oder bereits davor erfolgt ein Erfassen von Umgebungsdaten betreffend die Umgebung des Fahrzeugs. Diese Umgebungsdaten werden für den weiteren Einparkvorgang benötigt. Gegebenenfalls erkennt das Fahrzeug damit die Abmessungen der Parklücke, die Umgebung vor der Parklücke und eventuell auch den Verkehr vor der Parklücke. Unter Umständen werden durch die Sensorik des Fahrzeugs auch weitere Daten erfasst und bereitgestellt.

Durch den Einparkassistenten erfolgt nun ein Bestimmen eines Startbereichs außerhalb der Parklücke für ein automatisches Einparken des Fahrzeugs in die Parklücke auf der Basis der Umgebungsdaten. Nachdem also der vollständig manuelle Einparkversuch abgebrochen wurde, übernimmt der Einparkassistent den Einparkvorgang. Dazu bestimmt der Einparkassistent zunächst einen (idealen) Startbereich, von dem aus ein Rangieren in die Parklücke möglich ist. Nun wird das Fahrzeug automatisch aus der aktuellen Position in der Parklücke in den Startbereich durch den Einparkassistenten geführt oder gefahren. Dies bedeutet, dass nun nach dem abgebrochenen manuellen Einparkversuch der Fahrer aus der aktuellen Position, in der er in der Parklücke "feststeckt", durch den Einparkassistenten automatisch herausgefahren oder z.B. mittels einer berechneten Trajektorie herausgeführt wird. So wird das Fahrzeug vollkommen automatisch oder teilautomatisch von der aktuellen Position, die sich zumindest teilweise in der Parklücke befindet, in den Startbereich herausgeführt bzw. herausgefahren. Schließlich erfolgt ein automatisches Einparken des Fahrzeugs von dem Startbereich in die Parklücke durch den Einparkassistenten. Alternativ kann dem Fahrer wiederum ausgehend von der jeweiligen Position in dem Startbereich eine Trajektorie angezeigt werden, der er entlangfahren muss, um zu einer automatisch generierten Zielposition in der Parklücke zu gelangen. In jedem Fall wird dem Fahrer die Möglichkeit gegeben, nach einem abgebrochenen manuellen Einparkversuch eine (gewünschte) Zielposition in der Parklücke noch zu erreichen.

In einer Weiterbildung erfolgt das automatische Führen des Fahrzeugs in den Startbereich und von dem Einparkassistenten wird ermittelt, ob sich das Fahrzeug in einer Startposition in dem Startbereich befindet, und, wenn ja, wird das Fahrzeug automatisch oder teilautomatisch von der Startposition in die Parklücke eingeparkt. Es erfolgt also zunächst ein halbautomatisches Ausparken aus der unerwünschten Position in der Parklücke und es wird automatisch überprüft, ob der Fahrer in der Lage war, sein Fahrzeug in eine Startposition in dem Startbereich zu bewegen. Erst von dort aus ist ein (automatischer) Einparkvorgang in die Parklücke möglich.

In einer weiteren Ausführungsform wird das Fahrzeug automatisch zu einer Zielposition in der Parklücke durch den Einparkassistenten gefahren. Das Fahrzeug fährt also von dem Startbereich automatisch in die Parklücke, und zwar auf eine exakte Zielposition. Damit wird dem Fahrer ein erneuter Einparkversuch abgenommen. Falls der Fahrer jedoch wünscht, dass er von dem Startbereich erneut manuell in die Parklücke einparkt, kann er den Einparkassistenten auf halbautomatisch stellen oder ihn sogar ganz deaktivieren.

In einer Ausgestaltung liegt der Startbereich parallel zu einer Fahrbahn, an der sich die Parklücke befindet. In der Regel liegen Parkplätze am Rande einer Fahrbahn. Die Parkplätze können parallel zu der Fahrbahn, senkrecht zu der Fahrbahn oder beispielsweise in einem Fischgrätmuster relativ zu der Fahrbahn angeordnet sein. Um den Verkehr auf der Fahrbahn möglichst wenig zu behindern, ist es günstig, wenn der Parkvorgang aus einer Position heraus erfolgt, die sich parallel zu der Fahrbahn befindet, sodass das Fahrzeug nicht weit in die Fahrbahn ragt.

An der Parklücke wird ein Objekt, insbesondere ein weiteres Fahrzeug, detektiert, und der Startbereich in einem vorbestimmten Abstand zu dem Objekt bestimmt. Prinzipiell kann der Startbereich zwar auch in Abhängigkeit von der Fahrbahn und der Parklücke beziehungsweise dem Parkplatz bestimmt werden, aber in der Regel ist es vorteilhaft, wenn zur Bestimmung des Startbereichs (sämtliche) Objekte in der relevanten Umgebung berücksichtigt werden. So sollte beispielsweise zu Fahrzeugen in der Umgebung der Parklücke ein vorbestimmter Abstand eingehalten werden. Zu anderen Objekten können andere Abstände vorgegeben sein.

In einer weiteren Ausprägung liegt der Startbereich in einem Abstand von der Zielposition, der geringer als ein vorgegebener Maximalabstand ist. Wird beispielsweise in eine Parklücke parallel zur Fahrbahn eingeparkt, so besitzt das Fahrzeug in der idealen Parkposition, das heißt in der Zielposition, einen bestimmten Positionswert in Fahrtrichtung der Fahrbahn. Zum rückwärts Einparken ist es notwendig, das Fahrzeug in Fahrtrichtung vor diesen Positionswert zu bewegen, um das Fahrzeug anschließend rückwärts einparken zu können. Der Abstand von dem Positionswert der Zielposition in Fahrtrichtung zu dem Positionswert in dem Startbereich ebenfalls in Fahrtrichtung ist hier als Maximalabstand definiert. Im vorliegenden Beispiel soll dieser nicht überschritten werden.

Vorzugsweise wird bei dem automatischen Führen oder Fahren ein Verkehr in der Umgebung des Fahrzeugs berücksichtigt. Dies bedeutet, dass die Umgebung dynamisch bezüglich anderer Verkehrsteilnehmer analysiert wird. Beispielsweise sollte das Einfahren in die Parklücke nur dann erfolgen, wenn der nachfolgende Verkehr noch einen vorgegebenen Abstand zum eigenen Fahrzeug besitzt. Gegebenenfalls wird die Einparktrajektorie auch anders gewählt, wenn kein Verkehr in der Umgebung detektiert wird gegenüber dem Fall, dass viel Verkehr detektiert wird.

In einer speziellen Ausgestaltung kann das Verfahren abgebrochen werden, wenn das Fahrzeug den Startbereich unter vorgegebenen Bedingungen nicht erreicht. Beispielsweise herrscht in der Umgebung der Parklücke sehr viel Verkehr, sodass das Fahrzeug nicht automatisch aus der Parklücke in den Startbereich fahren kann. In diesem Fall ist es günstig, wenn der Vorgang abgebrochen wird. Weiterhin kann es sein, dass der Startbereich von der aktuellen Position in der Parklücke von dem Fahrzeug überhaupt nicht erreichbar ist. Auch in diesem Fall ist es günstig, wenn das Verfahren abgebrochen wird. Gegebenenfalls muss der Fahrer dann eine andere Parklücke suchen.

Gemäß einer weiteren Ausgestaltung kann vorgesehen sein, dass das Erfassen der Umgebungsdaten des Fahrzeugs automatisch aktiviert wird, wenn das Fahrzeug eine vorgegebene Geschwindigkeit unterschreitet. Wenn also das Fahrzeug, wie es bei einem Parkvorgang typisch ist, sehr langsam wird, ist es von Vorteil, wenn die Sensorik des Fahrzeugs automatisch beginnt, die Umgebung zu erfassen. Dies ist besonders günstig, wenn ein automatisiertes Einparken erst nach oder beim Abbruch eines manuellen Einparkversuchs aktiviert wird, denn durch das automatische Aktivieren der Sensorik können rechtzeitig Daten für einen eventuellen Ausparkvorgang gewonnen werden. Der Fahrer muss sich dann nicht darum kümmern, in einer Situation, die ihn ohnehin bereits sehr fordert, auch noch etwaige Sensorik des Fahrzeugs anzuschalten. Außerdem ist das Aktivieren der Sensorik zum Erfassen der Umgebungsdaten auf automatische Weise auch dann von Vorteil, wenn der Einparkassistent bei dem manuellen Einparkversuch noch gar nicht aktiviert ist. Das Fahrzeug hat bei dem manuellen Einparkversuch dann bereits die Umgebung beziehungsweise die Parklücke erfasst und kann die erfassten Umgebungsdaten zum automatisierten beziehungsweise automatischen Herausführen aus der Parklücke nach dem abgebrochenen Einparkversuch nutzen. Dadurch stehen beim Aktivieren des Einparkassistenten die Umgebungsdaten bereits zur Verfügung und sie müssen nicht erst noch gewonnen werden.

In vorteilhafter Weise ist der Einparkassistent bezüglich gewisser Parameter konfigurierbar. So ist es von besonderem Vorteil, wenn diejenige Seite des Fahrzeugs in dem Einparkassistenten konfiguriert wird, auf der ein Fahrer das Fahrzeug fährt. Bei links gefahrenen Fahrzeugen sollte der Einparkassistent insbesondere für das teilautomatische Einparken also für Linksfahrer und bei rechts gefahrenen Fahrzeugen für Rechtsfahrer konfiguriert werden. Dadurch können die jeweiligen Fahrer besser unterstützt werden.

In einer weiteren Ausgestaltung werden bei dem Bestimmen des Startbereichs Daten von einem Navigationssystem genutzt. Unter Umständen können nämlich die Sensoren des Fahrzeugs den Startbereich nicht vollkommen erfassen. In diesem Fall ist es günstig, wenn das Fahrzeug beziehungsweise der Einparkassistent auf geografische Daten eines Navigationssystems zurückgreifen kann. Gegebenenfalls wird der Startbereich sowohl anhand der Daten des Navigationssystems als auch anhand der Daten des Fahrzeugs bestimmt.

Die oben formulierte Aufgabe wird erfindungsgemäß auch gelöst durch ein Fahrzeug mit einem Einparkassistenten, der ein Ausführen eines vollständig manuellen Einparkversuchs in eine Parklücke und sein Aktivieren in der Parklücke ermöglicht, und einer Sensoreinrichtung zum Erfassen von Umgebungsdaten betreffend die Umgebung des Fahrzeugs, wobei der Einparkassistent eingerichtet ist zum Bestimmen eines Startbereichs außerhalb der Parklücke für ein automatisches Einparken des Fahrzeugs in die Parklücke auf der Basis der Umgebungsdaten, automatisches Führen oder Fahren des Fahrzeugs aus der Parklücke in den Startbereich und automatisches Einparken des Fahrzeugs von dem Startbereich in die Parklücke.

Die oben im Zusammenhang mit dem erfindungsgemäßen Verfahren geschilderten Variationsmöglichkeiten und Vorteile können sinngemäß auf das erfindungsgemäße Fahrzeug übertragen werden. Dabei stellen die jeweiligen Verfahrensmerkmale funktionelle Merkmale jeweiliger Mittel des Fahrzeugs dar.

Die vorliegende Erfindung wird nun anhand der beigefügten Zeichnungen näher erläutert, in denen zeigen:
- Fig. 1: eine erfolgreiche Einparksituation;
- Fig. 2: eine nicht erfolgreiche Einparksituation;
- Fig. 3: das Bestimmen eines Startbereichs für einen erfolgreichen Einparkvorgang; und

- Fig. 4: das Bestimmen des Startbereichs innerhalb vorgegebener Grenzen.

Die nachfolgenden Beispiele können sich auf Fahrzeuge aller Art beziehen, für die ein Einparken gewünscht ist. Die Parklücken können parallel zur Fahrbahn, senkrecht zur Fahrbahn oder in jedem anderen Winkel zur Fahrbahn angeordnet sein. Die Beispiele zeigen entsprechende Verfahren, gleichzeitig aber auch die notwendige Ausgestaltung der Einparkassistenten von Fahrzeugen.

Steckt das Fahrzeug beispielsweise bei einem nicht erfolgreichen Einparkversuch in einer Parklücke fest, so soll, wenn irgendwie möglich, dennoch ein Einparken erfolgreich zu Ende geführt werden. Daher ist es Ziel der vorliegenden Anmeldung, ein Fahrzeug nach einem manuellen Einparkversuch automatisch oder teilautomatisch in eine Position zu bewegen, von wo das Parkmanöver automatisch erfolgreich zu Ende geführt werden kann. Das manuelle Einparken soll also zu einem automatischen oder teilautomatischen Einparken ergänzt werden. Dabei ist von besonderer Bedeutung, dass das automatisierte Einparken erst in einer, wenn auch missglückten, Parksituation beginnt.

Der Fahrer beginnt also zunächst, sein Fahrzeug manuell in eine Parklücke zu rangieren. Während des Einparkvorgangs erkennt er jedoch, dass er den Einparkvorgang manuell nicht erfolgreich abschließen kann. Er wünscht daher, dass der Einparkassistent, d.h. das automatische oder teilautomatische Einparksystem des Fahrzeugs, ihm diese Aufgabe abnimmt und das Fahrzeug zumindest mit Unterstützung des Einparkassistenten in die Parklücke gebracht werden kann. Dazu bricht er den manuellen Einparkvorgang beispielsweise dadurch ab, dass er den Einparkassistenten aktiviert.

Der Einparkassistent analysiert die Umgebung und insbesondere die Parklücke sowie die Position und Ausrichtung des eigenen Fahrzeugs. Falls der Einparkassistent feststellt, dass von der aktuellen Position aus ein Einparken direkt möglich ist, so wird er dies beispielsweise automatisch durchführen. Dazu muss der Einparkassistent gegebenenfalls nur den Rückwärtsgang einschalten, um in eine Zielposition in der Parklücke zu gelangen.

Wenn jedoch das automatische System beziehungsweise der Einparkassistent den Einparkvorgang nicht durch einfaches Einlegen des Rückwärtsgangs vervollständigen kann und es notwendig ist, das Fahrzeug ein wenig vorwärts zu fahren, ist man mit der Situation konfrontiert, dass man in den entgegenkommenden Verkehr einfahren muss. Für das Vorwärtsfahren beziehungsweise das entsprechende Herausfahren aus der unerwünschten Position in der Parklücke muss nun eine Trajektorie aufgestellt werden hin zu einer Position, von der das Fahrzeug erfolgreich eingeparkt werden kann. Die Herausforderung besteht nun darin, dass in der unerwünschten Position in der Parklücke ein Startbereich außerhalb der Parklücke ermittelt wird, in den das Fahrzeug aus der aktuellen Position gefahren wird und von dem aus das Fahrzeug die Zielposition in der Parklücke beim Einparken erreichen kann. Dabei ist es nicht zwingend erforderlich, dass das Fahrzeug in eine exakte Position außerhalb der Parklücke (sogenannte OK-Position) gebracht wird. Vielmehr genügt es, wenn das Fahrzeug so rasch wie möglich in einen Bereich gebracht wird, in dem irgendeine OK-Position liegt. Von jeder dieser OK-Positionen in dem Startbereich kann der Einparkassistent die Zielposition in der Parklücke erreichen.

Bei einem parallelen Einparkvorgang kann der Startbereich, in den das Fahrzeug für einen erfolgreichen Einparkvorgang gebracht werden soll, wie folgt ermittelt werden:
a) Der Startbereich soll parallel zu einem Objekt (insbesondere Fahrzeug), das die Parklücke begrenzt, ausgerichtet sein.
b) Der Startbereich soll sich in einem konfigurierbaren Abstand zu dem Objekt befinden.
c) Der Startbereich sollte innerhalb einer oder mehrerer konfigurierbarer Maximaldistanzen von der Parklücke liegen (z.B. maximale Distanz in X-Richtung und maximale Distanz in Y-Richtung).
d) Die Trajektorie zum Fahren des Fahrzeugs in den Startbereich sollte so gewählt werden, dass der herannahende Verkehr beim Befahren der Trajektorie möglichst wenig behindert wird.

Die oben unter c) gewählten Maximaldistanzen ermöglichen unter normalen Umständen, dass das Fahrzeug eine OK-Position in dem Startbereich findet, bevor es die Maximaldistanz überschreitet. Wenn eine OK-Position innerhalb dieser Maximaldistanz nicht erreicht wird, wird das Manöver beispielsweise abgebrochen.

Im Folgenden werden weitere Randbedingungen betrachtet, die Einfluss auf den Einparkvorgang nehmen können. Beispielsweise kann ein Parklückensuchalgorithmus unterhalb einer vorbestimmten Geschwindigkeit, z.B. 20 km/h, automatisch aktiviert werden. So wird beispielsweise eine Parklücke automatisch erfasst, wenn sich das Fahrzeug dieser Parklücke langsam nähert. Die Dimensionen der Parklücke können aktualisiert werden, indem neue Messungen durchgeführt werden, wenn der Fahrer das Fahrzeug in die Parklücke lenkt.

Unabhängig von dem automatischen Parklückensuchalgorithmus kann eine Trajektorie-Planung aktiviert werden. Diese Trajektorie-Planung kann beispielsweise ein Teil einer Funktion sein, die durch den Fahrer aktiviert werden muss. Beispielsweise würde der Fahrer die Trajektorie-Planung nur aktivieren, wenn er bei dem manuellen Einparkvorgang stecken bleibt. Falls jedoch der Parklückensuchalgorithmus nicht aktiviert wurde, können dennoch hilfreiche Messungen durchgeführt werden. Solange sich nämlich das Fahrzeug in der Parklücke befindet, können die Sensoren des Fahrzeugs im Frontbereich und im Rückbereich Hindernisse wahrnehmen. Das System berechnet daraus einen möglichen Startbereich, in dem das Fahrzeug OK-Positionen erreichen kann. Der Einparkassistent beziehungsweise das System kann dann das Fahrzeug z.B. vollautomatisch in diesen Startbereich fahren. Voraussetzung dafür war jedoch, dass der Fahrer den Einparkassistenten aktiviert.

Falls der Parklückensuchalgorithmus bereits aktiviert war, liegen Daten über die Parklücke vor. Falls der Parklückensuchalgorithmus noch nicht aktiviert war, so sind zum Aktivieren gegebenenfalls mehrere Parameter zu beachten. Beispielsweise sollte bei dem Aktivieren angegeben werden, auf welcher Seite der Fahrer fährt. Der Fahrer kann so beispielsweise mit einem Indikatorsignal angeben, auf welcher Seite er fährt, wenn er das System aktiviert. Wenn der Fahrer die Seite nicht wählt, kann das System beziehungsweise der Einparkassistent die Seite basierend darauf bestimmen, ob es sich um ein links oder rechts gesteuertes Fahrzeug handelt, d.h. ob das Fahrzeug beispielsweise in Großbritannien oder in Deutschland verkauft wurde. Bei Linksfahrbetrieb würde die Standardoption beispielsweise bedeuten, dass auf der rechten Seite der Fahrbahn eingeparkt wird und umgekehrt.

Eine weitere Option könnte darin bestehen, Straßennetzdaten eines Navigationssystems zu nutzen, um die Richtung des Verkehrs zu überprüfen. Daraus wiederum könnte die Einparkseite bestimmt werden.

Wenn der Fahrer den Einparkassistenten aktiviert, wird dieser basierend auf den Dimensionen der Parklücke und der Position des Fahrzeugs ein Standardeinparkmanöver anbieten. Dieses kann beispielsweise für senkrechtes Einparken vorwärts und rückwärts oder paralleles Einparken vorgesehen sein. Der Fahrer kann dann das Standardmanöver oder ein anderes Manöver auf dem Bildschirm auswählen.

Auch Situationen wie das Parken auf der falschen Straßenseite, z.B. in einer Einbahnstraße, können bewältigt werden. Dabei kann man sich beispielsweise auf Straßennetzdaten oder Navigationsdaten stützen. Andernfalls kann man die Logik gemäß den oben angeführten Aspekten wählen, wonach der Fahrer die Seite manuell wählt oder die Seite davon abhängig gewählt wird, ob das Fahrzeug links oder rechts geführt ist.

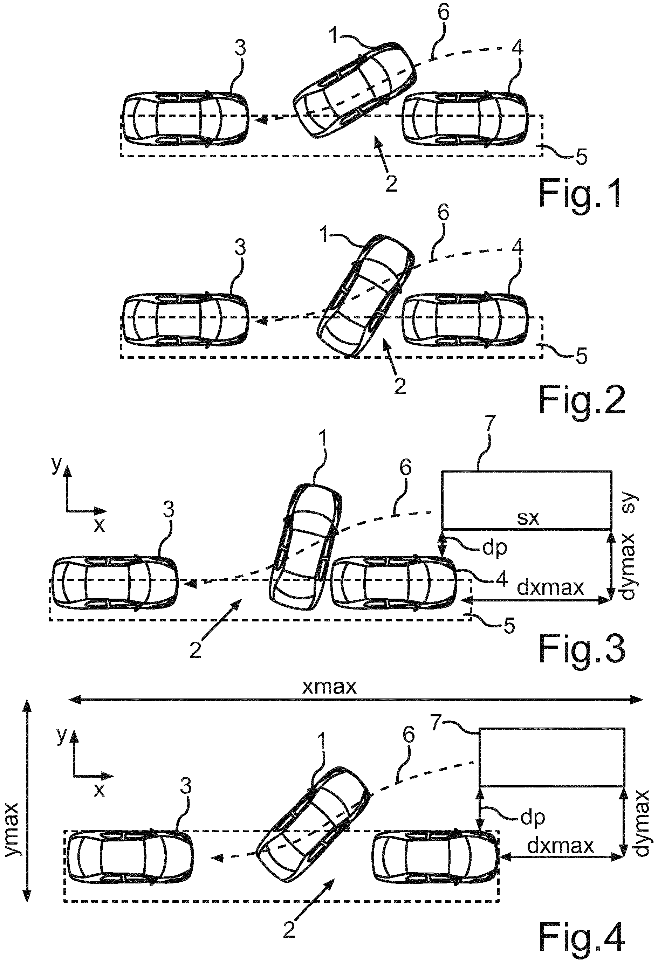

Anhand der Fig. 1 bis 4 werden nun konkrete Einparksituationen im Detail beschrieben. Gemäß Fig. 1 soll das eigene Fahrzeug 1 in eine Parklücke 2 eingeparkt werden, die sich zwischen zwei hintereinander stehenden weiteren Fahrzeugen 3 und 4 befindet. Beim Parken stehen die Fahrzeuge beispielsweise mit einer Seite auf einem Parkstreifen 5. Der Parkstreifen 5 verläuft parallel zu der in Fig. 1 nicht eingezeichneten Fahrbahn.

Üblicherweise wird das Fahrzeug 1 in die Parklücke 2 rückwärts einparken. Der Einparkvorgang wurde entsprechend der Trajektorie 6 zunächst manuell begonnen. Der manuelle Vorgang wird in der in Fig. 1 dargestellten Situation abgebrochen. Der Fahrer aktiviert nun die Funktion "manuellen Parkvorgang automatisch beenden". Das Fahrzeug 1 befindet sich also bereits teilweise in der Parklücke und der Einparkassistent soll nun die Aufgabe übernehmen, den Parkvorgang zu beenden. Die Sensorik des Fahrzeugs 1 stellt nun Daten für den Einparkassistenten zur Verfügung, die sie bereits vorab, das heißt vor dem Aktivieren des Einparkassistenten, gewonnen hat oder erst nach dem Aktivieren des Einparkassistenten gewinnt beziehungsweise gewinnen wird. Diese Umgebungsdaten beziehen sich beispielsweise auf die Größe der Parklücke 2, auf die relative Position des Fahrzeugs 1 in Bezug auf die Parklücke 2 und/oder auf die Fahrbahn vor der Parklücke 2. Auch andere Daten können von dem Fahrzeug 1 erfasst beziehungsweise aufgenommen werden (z.B. Navigationsdaten) und für den Einparkvorgang verwertet werden. Im vorliegenden Beispiel erkennt der Einparkassistent, dass sich das Fahrzeug bereits auf einer passenden Trajektorie 6 befindet und der Einparkvorgang auf dieser Trajektorie 6 ohne weitere Manöver automatisch vollendet werden kann. Daher fährt das Fahrzeug 1 automatisch in die Parklücke 2 entlang der Trajektorie 6 ein.

In dem Beispiel von Fig. 2 herrscht die gleiche statische Ausgangsposition. Das Fahrzeug 1 soll in eine Parklücke 2 zwischen den hintereinander stehenden Fahrzeugen 3 und 4 einparken. Der Fahrer wählt auch hier zunächst das manuelle Einparken. Er gerät aber von der idealen Trajektorie 6 ab und gerät zu steil in die Parklücke 2. Dies kann er durch stärkeres Lenken nicht mehr ausgleichen. Das Fahrzeug 1 "steckt in der Parklücke 2 fest". Der Einparkversuch des Fahrers des Fahrzeugs 1 ist damit misslungen. Der Fahrer könnte sich aus dieser Situation nur dadurch befreien, dass er aus der Parklücke 2 wieder herausfährt und einen neuen Einparkversuch unternimmt. Anstelle des erneuten Versuchs aktiviert der Fahrer in der in Fig. 2 dargestellten Situation nun den Einparkassistenten. Dies bedeutet, dass er die Funktion "manuelles Einparken abbrechen und automatisch beenden" wählt.

In dieser Situation wird das weitere Verfahren gemäß den Fig. 3 und 4 ausgeführt. Insbesondere wird das Fahrzeug 1 nun automatisch in einen Startbereich 7 gefahren, von welchem aus das Einparken in die Parklücke 2 ohne Weiteres möglich ist.

Der Startbereich 7 wird vorzugsweise so gewählt, dass er den nahenden Verkehr möglichst wenig behindert. Dazu können Grenzen für den Startbereich 7 vorgegeben werden. Beispielsweise kann es sich bei dem Startbereich um ein Rechteck handeln, das sich auf der Fahrbahn befindet. Bezogen auf das x-y-Koordinatensystem (x-Richtung entspricht der Fahrtrichtung und y-Richtung erstreckt sich senkrecht dazu) kann der Startbereich 7 in x-Richtung eine Ausdehnung sx und in y-Richtung eine Ausdehnung sy aufweisen. Diese Größen sind gegebenenfalls konfigurierbar wie auch die nachfolgenden Distanzen dp, dxmax und dymax. Dabei bedeutet die Distanz dp der Abstand des Startbereichs 7 von dem die Parklücke 2 begrenzenden Objekt, nämlich hier das Fahrzeug 4. Die Distanz dxmax beschreibt beispielsweise die maximale Distanz, die der Startbereich 7 in Fahrtrichtung x gegenüber dem vorderen Fahrzeug 4 vor der Parklücke 2 einnehmen darf. Die Distanz dymax beschreibt beispielsweise den Abstand des Startbereichs 7 von dem (bezogen auf die Fahrtrichtung) rechten Rand des Fahrzeugs 1 in dessen Zielposition in der Parklücke 2.

Die angesprochenen Größen beziehungsweise Distanzen sx, sy, dp, dxmax und dymax können vorab konfiguriert sein und/oder während des Einparkvorgangs durch den Einparkassistenten automatisch verändert werden.

Des Weiteren kann der gesamte Einparkvorgang einschließlich des Startbereichs 7 auf ein maximales Areal beschränkt werden. Dieses maximale Areal kann beispielsweise durch eine Ausdehnung xmax in x-Richtung und eine Ausdehnung ymax in y-Richtung vorgegeben sein. Dieses Areal kann in Bezug auf die Parklücke 2 festgelegt sein. Gegebenenfalls ist dieses maximale Areal durch den Einparkassistenten z.B. an die jeweilige Verkehrssituation anpassbar. In jedem Fall muss der Einparkassistent den Startbereich 7 und die Trajektorie 6 so wählen, dass das Fahrzeug während des Einparkvorgangs das maximale Areal nicht verlässt. Nun kann das Fahrzeug automatisch oder gegebenenfalls auch halbautomatisch von der Startposition in dem Startbereich 7 in die Parklücke eingefahren werden. Im vorliegenden Fall stößt das Fahrzeug also rückwärts von dem Startbereich 7 in die Parklücke 2, nachdem es zunächst automatisch vorwärts in den Startbereich 7 gefahren wurde.

Falls aus der Situation von Fig. 3, in der das Fahrzeug 1 in der Parklücke 2 "fest steckt", nicht in den Startbereich 7 gefahren werden kann, bricht das Verfahren vorzugsweise automatisch ab. Ein derartiger Abbruch kann auch vorgesehen sein, wenn der Einparkassistent erkennt, dass die Parklücke beispielsweise zu klein ist.

## Patentansprüche

1. Verfahren zum Einparken eines Fahrzeugs (1) in eine Parklücke (2) umfassend
- Ausführen eines vollständig manuellen Einparkversuchs in die Parklücke (2),
- Aktivieren eines Einparkassistenten des Fahrzeugs (1) in der Parklücke (2),
- Erfassen von Umgebungsdaten betreffend die Umgebung des Fahrzeugs (1),
- Bestimmen eines Startbereichs (7) außerhalb der Parklücke (2) für ein automatisches Einparken des Fahrzeugs (1) in die Parklücke (2) durch den Einparkassistenten auf der Basis der Umgebungsdaten,
- automatisches Fahren oder Führen des Fahrzeugs (1) aus der Parklücke (2) in den Startbereich (7) durch den Einparkassistenten und
- automatisches Einparken oder Führen des Fahrzeugs (1) von dem Startbereich (7) in die Parklücke (2) durch den Einparkassistenten, **dadurch gekennzeichnet, dass** an der Parklücke (2) ein Objekt detektiert wird, und der Startbereich (7) in einem vorbestimmten Abstand zu dem Objekt bestimmt wird.

2. Verfahren nach Anspruch 1,
**dadurch gekennzeichnet, dass**,
wenn das automatische Führen des Fahrzeugs (1) in den Startbereich (7) erfolgt, von dem Einparkassistenten ermittelt wird, ob sich das Fahrzeug (1) in einer Startposition in dem Startbereich (7) befindet, und, wenn ja, das Fahrzeug automatisch oder teilautomatisch von der Startposition in die Parklücke (2) eingeparkt wird.

3. Verfahren nach Anspruch 1 oder 2,
**dadurch gekennzeichnet, dass**
das Fahrzeug (1) automatisch zu einer Zielposition in der Parklücke (2) durch den Einparkassistenten gefahren wird.

4. Verfahren nach einem der vorhergehenden Ansprüche,
**dadurch gekennzeichnet, dass**
der Startbereich (7) parallel zu einer Fahrbahn liegt, an der sich die Parklücke (2) befindet.

5. Verfahren nach einem der vorhergehenden Ansprüche,
**dadurch gekennzeichnet, dass**
an der Parklücke (2) als das Objekt ein weiteres Fahrzeug (4) detektiert wird, und der Startbereich (7) in einem vorbestimmten Abstand zu dem Objekt bestimmt wird.

6. Verfahren nach Anspruch 3 und einem weiteren der vorhergehenden Ansprüche,
**dadurch gekennzeichnet, dass**
der Startbereich (7) in einem Abstand von der Zielposition liegt, der geringer als ein vorgegebener Maximalabstand ist.

7. Verfahren nach einem der vorhergehenden Ansprüche,
**dadurch gekennzeichnet, dass**
bei dem automatischen Führen oder Fahren ein Verkehr in der Umgebung des Fahrzeugs (1) berücksichtigt wird.

8. Verfahren nach einem der vorhergehenden Ansprüche,
**dadurch gekennzeichnet, dass**
das Verfahren abgebrochen wird, wenn das Fahrzeug den Startbereich (7) unter vorgegebenen Bedingungen nicht erreicht.

9. Verfahren nach einem der vorhergehenden Ansprüche,
**dadurch gekennzeichnet, dass**
das Erfassen der Umgebungsdaten des Fahrzeugs (1) automatisch aktiviert wird, wenn das Fahrzeug (1) eine vorgegebene Geschwindigkeit unterschreitet.

10. Verfahren nach einem der vorhergehenden Ansprüche,
**dadurch gekennzeichnet, dass**
diejenige Seite des Fahrzeugs (1) in dem Einparkassistenten konfiguriert wird, auf der ein Fahrer des Fahrzeugs (1) fährt.

11. Verfahren nach einem der vorhergehenden Ansprüche,
**dadurch gekennzeichnet, dass**
bei dem Bestimmen des Startbereichs Daten von einem Navigationssystem genutzt werden.

12. Fahrzeug (1) mit
- einem Einparkassistenten, der eingerichtet ist, ein Ausführen eines vollständig manuellen Einparkversuchs in eine Parklücke (2) zu ermöglichen und der in der Parklücke (2) aktivierbar ist, und
- einer Sensoreinrichtung zum Erfassen von Umgebungsdaten betreffend die Umgebung des Fahrzeugs (1),
wobei der Einparkassistent eingerichtet ist zum
- Bestimmen eines Startbereichs außerhalb der Parklücke (2) für ein automatisches Einparken des Fahrzeugs (1) in die Parklücke (2) auf der Basis der Umgebungsdaten,
- automatischen Fahren oder Führen des Fahrzeugs (1) aus der Parklücke (2) in den Startbereich (7) und
- automatischen Einparken oder Führen des Fahrzeugs (1) von dem Startbereich (7) in die Parklücke (2), **dadurch gekennzeichnet, dass** der Einparkassistent eingerichtet ist, an der Parklücke (2) ein Objekt zu detektieren, und den Startbereich (7) in einem vorbestimmten Abstand zu dem Objekt zu bestimmen.

## Claims

1. Method for parking a vehicle (1) in a parking space (2), comprising
- executing a completely manual attempt to park in the parking space(2),
- activating a parking assistant of the vehicle (1) in the parking space (2),
- recording data relating to the area surrounding the vehicle (1),
- determining a starting region (7) outside the parking space (2) for automatic parking of the vehicle (1) in the parking space (2) by the parking assistant on the basis of the data relating to the surrounding area,
- the parking assistant automatically driving or guiding the vehicle (1) out of the parking space (2) into the starting region (7), and
- the parking assistant automatically parking or guiding the vehicle (1) in/into the parking space (2) from the starting region (7), **characterized in that** an object is detected at the parking space (2) and the starting region (7) is determined at a predetermined distance from the object.

2. Method according to Claim 1,
**characterized in that**,
when the vehicle (1) is automatically guided into the starting region (7), the parking assistant ascertains whether the vehicle (1) is in a starting position in the starting region (7) and, if this is the case, the vehicle is automatically or partially automatically parked in the parking space (2) from the starting position.

3. Method according to Claim 1 or 2,
**characterized in that**
the vehicle (1) is automatically driven to a target position in the parking space (2) by the parking assistant.

4. Method according to one of the preceding claims,
**characterized in that**
the starting region (7) is situated parallel in relation to a roadway on which the parking space (2) is located.

5. Method according to one of the preceding claims,
**characterized in that**
a further vehicle (4) is detected at the parking space (2) as the object and the starting region (7) is determined at a predetermined distance from the object.

6. Method according to Claim 3 and a further one of the preceding claims,
**characterized in that**
the starting region (7) is situated at a distance from the target position which is smaller than a prespecified maximum distance.

7. Method according to one of the preceding claims,
**characterized in that**
traffic in the area surrounding the vehicle (1) is taken into account during the automatic guiding or driving.

8. Method according to one of the preceding claims,
**characterized in that**
the method is aborted if the vehicle does not reach the starting region (7) under prespecified conditions.

9. Method according to one of the preceding claims,
**characterized in that**
the process of recording the data relating to the area surrounding the vehicle (1) is automatically activated when the vehicle (1) falls below a prespecified speed.

10. Method according to one of the preceding claims,
**characterized in that**
that side of the vehicle (1) on which a driver of the vehicle (1) is driving is configured in the parking assistant.

11. Method according to one of the preceding claims, **characterized in that**
data from a navigation system is used when determining the starting region.

12. Vehicle (1) comprising
- a parking assistant which is designed to facilitate execution of a completely manual attempt to park in a parking space (2) and which can be activated in the parking space (2), and
- a sensor device for recording data relating to the area surrounding the vehicle (1),
wherein the parking assistant is designed to
- determine a starting region outside the parking space (2) for automatically parking the vehicle (1) in the parking space (2) on the basis of the data relating to the surrounding area,
- automatically driving or guiding the vehicle (1) out of the parking space (2) into the starting region (7), and
- automatically parking or guiding the vehicle (1) from the starting region (7) in/into the parking space (2), **characterized in that** the parking assistant is designed to detect an object at the parking space (2) and to determine the starting region (7) at a predetermined distance from the object.

## Revendications

1. Procédé permettant de garer un véhicule (1) sur une place de stationnement (2), comprenant les étapes consistant à
- effectuer une tentative de stationnement entièrement manuelle sur la place de stationnement (2),
- activer un système d'assistance au stationnement du véhicule (1) sur la place de stationnement (2),
- détecter des données environnementales concernant l'environnement du véhicule (1),
- déterminer une zone de départ (7) à l'extérieur de la place de stationnement (2) pour un stationnement automatique du véhicule (1) sur la place de stationnement (2) par le système d'assistance au stationnement sur la base des données environnementales,
- conduire ou guider automatiquement le véhicule (1) de la place de stationnement (2) à la zone de départ (7) par le système d'assistance au stationnement, et
- garer ou guider automatiquement le véhicule (1) de la zone de départ (7) à la place de stationnement (2) par le système d'assistance au stationnement,
**caractérisé en ce qu'**un objet est détecté au de la place de stationnement (2), et la zone de départ (7) est déterminée à une distance prédéterminée de l'objet.

2. Procédé selon la revendication 1, **caractérisé en ce que**, quand le guidage automatique du véhicule (1) vers la zone de départ (7) est effectué, le système d'assistance au stationnement établit si le véhicule (1) se trouve dans une position de départ dans la zone de départ (7), et si oui, le véhicule est garée de manière automatique ou semi-automatique de la position de départ à la place de stationnement (2).

3. Procédé selon la revendication 1 ou 2, **caractérisé en ce que** le véhicule (1) est conduit automatiquement par le système d'assistance au stationnement jusqu'à une position cible sur la place de stationnement (2).

4. Procédé selon l'une quelconque des revendications précédentes, **caractérisé en ce que** la zone de départ (7) se trouve en parallèle à une chaussée sur laquelle se trouve la place de stationnement (2).

5. Procédé selon l'une quelconque des revendications précédentes, **caractérisé en ce qu'**un autre véhicule (4) est détecté comme objet au niveau de la place de stationnement (2), et la zone de départ (7) est déterminée à une distance prédéterminée de l'objet.

6. Procédé selon la revendication 3 et une autre des revendications précédentes, **caractérisé en ce que** la zone de départ (7) se trouve à une distance de la position cible qui est inférieure à une distance maximale prédéfinie.

7. Procédé selon l'une quelconque des revendications précédentes, **caractérisé en ce que** lors du guidage ou de la conduite automatique, la circulation dans l'environnement du véhicule (1) est prise en compte.

8. Procédé selon l'une quelconque des revendications précédentes, **caractérisé en ce que** le procédé est abandonné si le véhicule n'atteint pas la zone de départ (7) sous des conditions prédéfinies.

9. Procédé selon l'une quelconque des revendications précédentes, **caractérisé en ce que** la détection des données environnementales du véhicule (1) est activée automatiquement si le véhicule (1) passe sous une vitesse prédéfinie.

10. Procédé selon l'une quelconque des revendications précédentes, **caractérisé en ce que** le côté du véhicule (1) sur lequel conduit un conducteur du véhicule (1) est configuré dans le système d'assistance au stationnement.

11. Procédé selon l'une quelconque des revendications précédentes, **caractérisé en ce que** lors de la détermination de la zone de départ, des données provenant d'un système de navigation sont exploitées.

12. Véhicule (1), comprenant
- un système d'assistance au stationnement qui est conçu pour permettre l'exécution d'une tentative de stationnement entièrement manuelle sur une place de stationnement (2) et qui peut être activé sur la place de stationnement (2), et
- un dispositif de détection permettant de détecter des données environnementales concernant l'environnement du véhicule (1),
le système d'assistance au stationnement étant conçu pour
- déterminer une zone de départ à l'extérieur de la place de stationnement (2) pour garer automatiquement le véhicule (1) sur la place de stationnement (2) sur la base des données environnementales,
- conduire ou guider automatiquement le véhicule (1) de la place de stationnement (2) à la zone de départ (7), et
- garer ou guider automatiquement le véhicule (1) de la zone de départ (7) à la place de stationnement (2),
**caractérisé en ce que** le système d'assistance au stationnement est conçu pour détecter un objet au niveau de la place de stationnement (2), et pour déterminer la zone de départ (7) à une distance prédéterminée de l'objet.
